# EUROPEAN PATENT APPLICATION

(11) **EP 0 862 177 A2**
(43) Date of publication of application: **02.09.1998**
(21) Application number: 98300940.8
(22) Date of filing: 10.02.1998
(51) Int. Cl.: G11B 25/06, G11B 15/32

(54) **Dual cassette size magnetic tape recorder**

(30) Priority: 14.02.1997 KR 974502
(71) Applicant: Samsung Electronics Co., Ltd., Suwon City, Kyungki-do (KR)
(72) Inventor: Park, Lae-soo, Suji-eup, Yongin, Kyonggi-do (KR); Lee, Chang-woo, Suwon, Kyonggi-do (KR)
(74) Representative: Robinson, Ian Michael

(57) **Abstract**

A mechanism for moving reels (10,20) and a tape cassette sensing switch (30) in a magnetic recorder, a moving unit (60) that can be rectilinearly moved back and forth; a supply reel driver (70) and a take up reel driver (80) respectively installed on the bottom surface of the main chassis (1) in spaced apart relation from each other; reel driving gears (72,82) respectively mounted on rotary shafts of the supply and a take up reel drivers; and a reel supporting unit (73,83) concentrically combined with the reel driving gears (72,82) on the main chassis and including thereon a supply and a take up reels (10,20). Each reel supporting unit (73,83) is rotated through a predetermined angle about the reel driving gears (72,82) according to the rectilinear movements of the moving member (60), to thereby alter the relative spacing between the supply reel (10) and the take up reel (20) and receive different sized tape cassettes. Further, the tape cassette sensing switch (30) is moved along a slant slot (8) in response to movement of the moving member (60), to engage different size tape cassettes.

## Description

The present invention relates in general to a magnetic recorder capable of receiving at least two different sized tape cassettes, such as a video cassette recorder (VCR), a camcorder, a digital-video cassette recorder (D-VCR) and the like. More particularly, the present invention relates to a simplified mechanism for moving a reel assembly and a tape cassette sensing switch in a magnetic recorder, thus reducing fabricating cost and enhancing reliability and performance of the recorder.

With the recent enhancement of performance and functions of magnetic recorders such as VCR, D-VCR and the like, various kinds of tape cassettes for use in the magnetic recorders have been provided according to various wants of users. The tape cassettes are diversified to be formed of different materials, to perform recording jobs in different manners, to be fabricated by different methods, and to have a record protecting function. The sizes of the tape cassettes are also diversified.

In addition, with the improvement of technologies in the magnetic recorder industry, a technology for selectively using different sized tape cassettes in a single magnetic recorder is desired.

As a prerequisite for selectively using the different sized tape cassettes in a magnetic recorder, a reel driving mechanism needs to be able to accommodate the different sized tape cassettes.

There have been disclosed various techniques for accommodating different sized tape cassettes in a magnetic recorder by structuring a reel driving mechanism to be able to move in a predetermined direction.

As an example, Japanese Patent Laid-open No. 8-167198 (1996) discloses a reel disk braking mechanism including: (1) a pair of reel disk bases for moving a pair of reel disks installed in such a manner that a distance between the pair of reel disk bases can be adjusted to a distance between reels of a first cassette when the first cassette is used, and a distance between reels of a second cassette when the second cassette is used; (2) brake arms supported by shafts installed on the pair of reel disk bases, respectively; (3) brake pads respectively installed on an end of each of the brake arms; and (4) a pair of slide cams. The pair of reel disk bases are capable of bringing the brake pads into contact with the respective reel disks, or separating the brake pads from the respective reel disks, at any position corresponding to the distance between the reels of the first and the second cassettes.

However, in such a conventional technique, brake assemblies are respectively loaded on the pair of reel disk bases. Accordingly, a great amount of power is required for moving the pair of reel disk bases. Moreover, instrumental structure as well as interference between the brake assemblies and other adjacent components should be considered for the great amount of power transmission. This results in a complicated structure and an increased cost.

In addition, reliability of performance may be reduced because the brake assemblies having a relatively complicated structure and a predetermined weight are loaded on the reel disk bases when moved.

Furthermore, the magnetic recorder utilizing two different sized tape cassettes requires a tape cassette sensing device for recognizing information of characteristics of the tape cassettes. However, such a tape cassette sensing device is not included in the conventional technique. Accordingly, the tape cassette sensing device may be separately structured and a power source for driving the tape cassette sensing device may be required. This results in a more complicated structure.

It is therefore an aim of the present invention to provide a simplified mechanism for moving reels in a magnetic recorder, where in the fabricating cost is reduced and the reliability and performance of the magnetic recorder is enhanced.

It is another aim of at least preferred embodiments of the present invention to provide a simplified mechanism for moving both a reel assembly and a tape cassette sensing switch in a magnetic recorder, wherein the tape cassette sensing switch is moved in association with movements of the reels.

According to one aspect of the present invention, there is provided a mechanism for moving reels and a tape cassette sensing switch in a magnetic recorder, comprising:
power generating means installed on a predetermined position of a main chassis;
a moving member mounted on a bottom surface of said main chassis in such a manner that said moving member can be rectilinearly moved back and forth;
power transmitting means for transmitting power from said power generating means to said moving member;
a supply reel driver and a take up reel driver respectively fixed to said bottom surface of said main chassis in spaced apart relation from each other;
reel driving gears respectively coupled to rotary shafts of said supply reel driver and said take up reel driver; and
reel supporting members for carrying a supply reel and a take up reel, respectively, which are concentrically combined with said reel driving gears on said main chassis, said reel supporting members each rotating by a predetermined angle associated with said rectilinear movements of said moving member to thereby alter the relative separation of said supply reel and said take up reel to receive at least two different sized tape cassettes.

Preferably, the power generating unit includes a driving motor that is erect-fixed at a corner portion of a top surface of the main chassis.

The power transmitting unit includes: a worm gear rod for transmitting power from the driving motor; and at least more than one driving gear that is rotated by rotational power of the worm gear rod.

A rack is fixed to the moving member, and a last driving gear of the driving gears is meshed with the rack.

The moving member includes first guide slots. First guide pins fixed to the main chassis are respectively inserted into the first guide slots. Accordingly, the movements of the moving member is guided by the first guide slots and the first guide pins. Interlocking members are combined with the moving member in such a manner that the interlocking members can be rectilinearly moved back and forth. The interlocking members are elastically supported by an elastic member in a predetermined direction. In addition, second guide pins are fixed to the interlocking members. The moving member includes second guide slots for insertion of the second guide pins. Accordingly, the movements of the interlocking members are guided by the second guide pins and the second guide slots in the same manner with the moving member.

Preferably, the elastic member is a torsion spring one end of which is supported by the moving member and an other end of which is supported by the interlocking members.

In addition, the reel supporting member is concentric with respect to a rotation center and includes a plurality of arc slots. A plurality of guide pins are fixed to the main chassis along traces of the arc slots. Accordingly, the reel supporting member is rotated by a predetermined angles along the guide pins. Combining pins to be respectively connected to the interlocking members are fixed. Accordingly, according to the movements of the interlocking members, the reel supporting member is rotated.

In addition, preferably, a tape cassette sensing switch moving portion wherein an MIC switch for sensing various information of a selected tape cassette is operated in association with the movements of the moving member.

The tape cassette sensing switch moving portion includes: a connecting unit installed on a predetermined position of the moving member; a first operating member rotatably combined with a predetermined portion of a bottom surface of the main chassis adjacent to the connecting unit; a second operating member rotatably combined with a predetermined portion of a top surface of the main chassis opposed to the first operating member so that the second operating member is moved in association with the first operating member; and a slider including an MIC switch thereon and rectilinearly moved back and forth by rotational movements of the second operating member along a slant slot formed on the main chassis.

A first connecting pin connected to the connecting unit is fixed to a predetermined position of the first operating member and a second connecting pin connected to the second operating member is fixed to an other position of the first operating member.

Preferably, the second operating member includes a third and a fourth guide slots formed in a direction of a length thereof. The second connecting pin of the first operating member is inserted into the third guide slot through the arc slot formed in the main chassis. Accordingly, the second operating member is rotated by rotations of the first operating member and the guide pins of the first operating member are guided by the arc slots formed on the main chassis.

In addition, a third and a fourth guide pins are fixed to the bottom surface of the slider. The third and the fourth guide pins are inserted into a slant slot of the main chassis. The third guide pin is inserted into the slant slot of the main chassis through the fourth guide slot of the second operating member. Accordingly, the slider is rectilinearly moved back and forth with guidance of the slant slot by the rotational movements of the second operating member.

The connecting unit includes a pair of connecting members, i.e., a first and a second connecting members and an elastic member. The first and the second connecting members are hinged with the corner portion of the moving member in such a manner that a space for location of the first connecting pin of the first operating member is formed between the first and the second connecting members. The first connecting member is connected to the second connecting member by the elastic member.

Preferably, the elastic member is a tension coil spring, ends of which are respectively fixed to the first and the second connecting members.

In addition, stopping portions of the first and the second connecting members are stopped against stopping projections formed in a single body with the main chassis, and cannot be rotated any more.

According to a second aspect of the present invention, there is provided a mechanism for use in a magnetic recorder, comprising:
a moving member arranged to be moveable in use along a linear reciprocating path;
a supply reel driver and take up reel driver arranged in spaced apart relation from each other, for driving a supply reel and a take up reel, respectively; and
first and second reel support members for supporting said supply reel and said take up reel respectively, said reel support members cooperating with said moving member such that said linear movement of said moving member results in rotation of said support members through a predetermined angle about said supply reel driver and said take up reel driver respectively, thereby altering separation of said supply reel and said take up reel to receive different size tape cassettes.

For a better understanding of the invention, and to show how embodiments of the same may be carried into effect, reference will now be made, by way of example, to the accompanying diagrammatic drawings, in which:
Figure 1 is a perspective view of two different sized tape cassettes and an MIC switch;
Figure 2 is a top view of a magnetic recorder deck including a mechanism for moving reels and a tape cassette sensing switch according to an embodiment of the present invention;
Figure 3 is an exploded perspective view of the mechanism of Figure 2;
Figure 4 is a bottom view of the mechanism when a relatively large tape cassette is used;
Figure 5 is a bottom view of the mechanism when a relatively small tape cassette is used;
Figure 6 is a cross sectional view of a reel motor, an MIC switch, a moving plate and adjacent components of the mechanism;

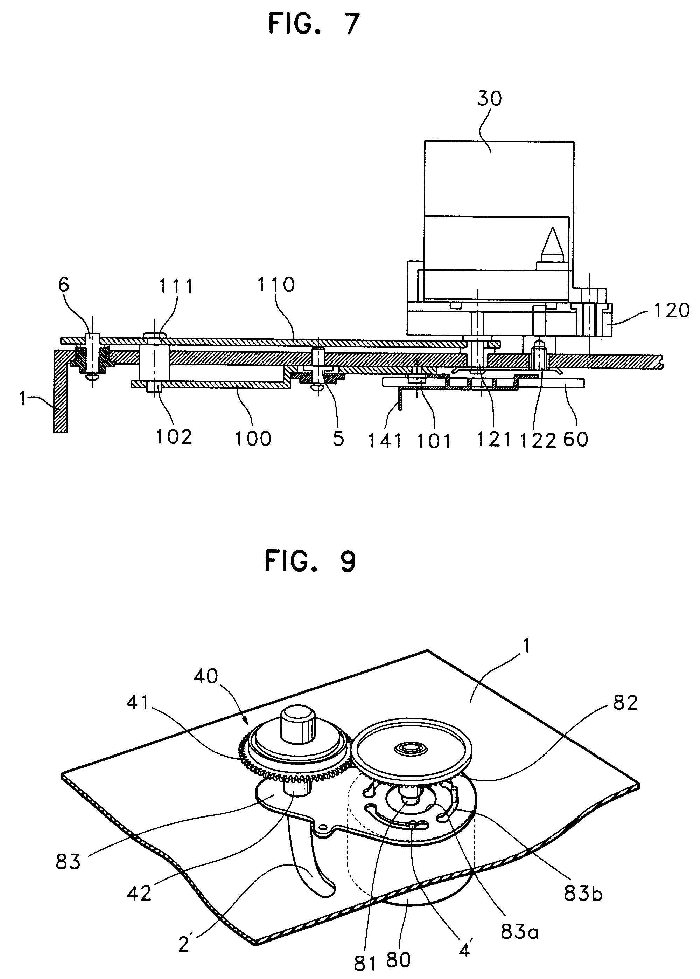

Figure 7 is a cross sectional view of an MIC switch moving unit of the mechanism;

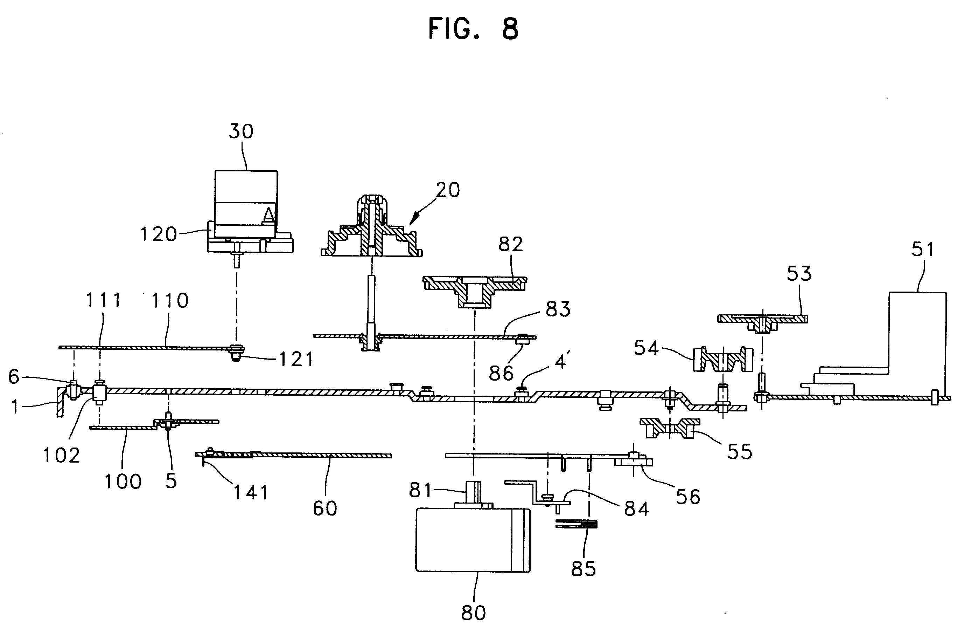

Figure 8 is an exploded cross sectional view illustrating Figures 6 and 7 in detail;
Figure 9 is a perspective view of a reel motor, a reel assembly and adjacent components of the mechanism; and
Figure 10 is a top view of an embodiment of a connecting unit for connecting a reel moving portion to a tape cassette sensing switch moving portion of the mechanism.

The preferred mechanism for moving reels and a tape cassette sensing switch will now be described in detail, referring to the accompanying drawings. For description purposes, elements having basically the same function are identified using common reference numbers throughout the drawings.

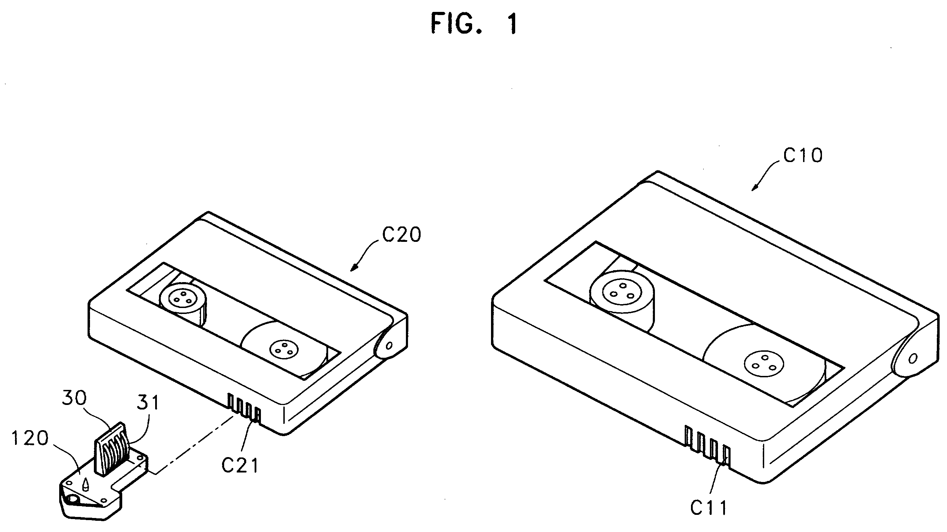

In terms of structure and operation, the described mechanism may be mainly divided into: a reel moving portion for moving a supply reel 10 and a take up reel 20 to respective positions according to sizes of the tape cassettes for example a relatively large tape cassette, i.e., a standard tape cassette C10 and a relatively small tape cassette C20 shown in Figure 1; and a tape cassette sensing switch moving portion moved in association with the reel moving portion, for moving a memory in cassette (MIC) switch 30 to a predetermined position to sense various information such as a material, a recording method, a record protecting technology and the like of a selected tape cassette C10 or C20.

Conveniently, an operation for moving the supply reel 10 and the take up reel 20 according to a selected tape cassette C10 or C20 is carried out at the same time that the MIC switch is moved.

First, the reel moving portion of the mechanism will be described.

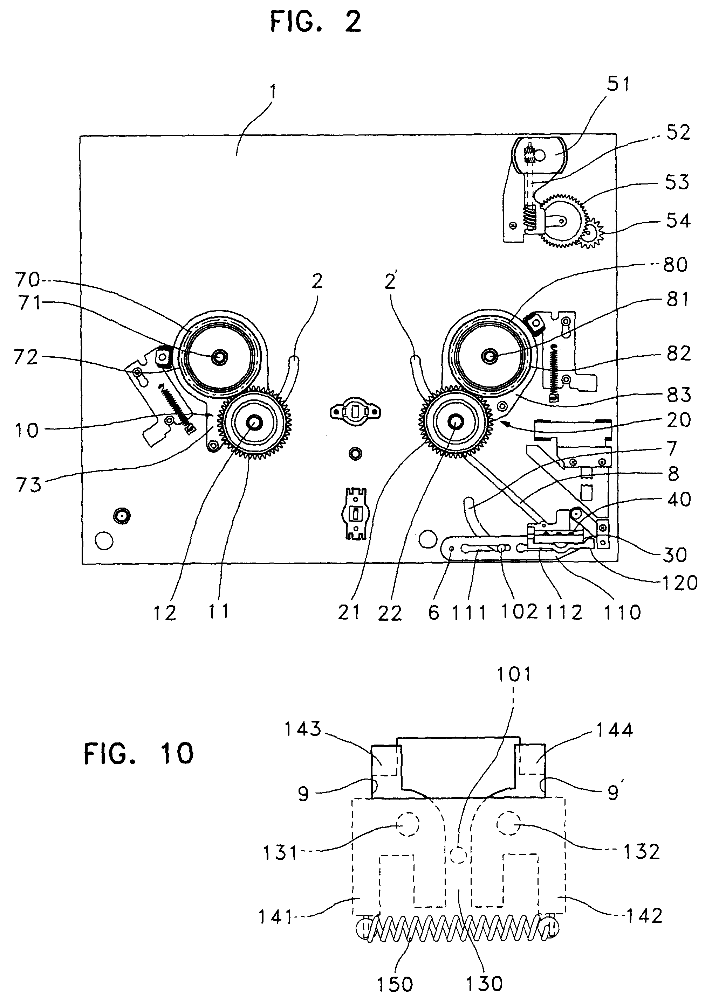

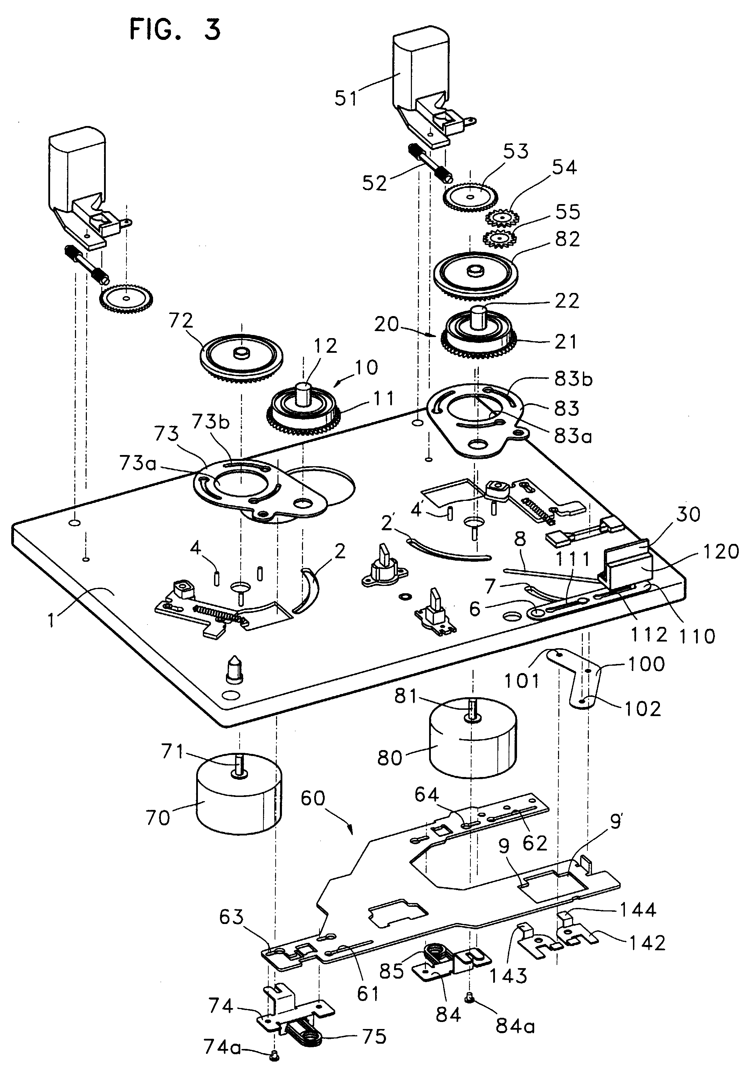

Referring to Figures 2 and 3, the reel moving portion includes: a driving motor 51 that is erect-fixed at a right upper corner of a main chassis 1; a worm gear rod 52 rotated by power from the driving motor 51; a first driving gear 53 rotated by the worm gear rod 52; a second driving gear 54 rotated by the first driving gear 53; a third driving gear 55 that is rotatably supported at a predetermined position on a bottom surface of the main chassis 1 and meshed with the second driving gear 54; a moving plate 60 that is rectilinearly moveable back and forth under the main chassis 1, i.e. a linear reciprocating movement; a rack 56 that is fixed at a predetermined position of the moving plate 60 and meshed with the third driving gear 55; a supply reel motor 70 and a take up reel motor 80 that are respectively fixed to the bottom surface of the main chassis 1 in spaced apart relation from each other by a predetermined distance, respective rotation shafts 71 and 81 of the supply reel motor 70 and the take up reel motor 80 protruding out of a top surface of the main chassis 1; reel driving gears 72 and 82 that are respectively combined with and fixed to the rotation shafts 71 and 81 of the supply reel motor 70 and the take up reel motor 80; reel brackets 73 and 83 that are concentrically combined with the reel driving gears 72 and 82 respectively between the main chassis 1 and the driving gears 72 and 82, a supply reel 10 and a take up reel installed on the reel brackets 73 and 83, respectively; interlocking members 74 and 84 movably combined with predetermined portions of the moving plate 60, for rotating the reel brackets 73 and 83 in a clockwise direction or in a counter-clockwise direction according to movements of the moving plate 60; elastic members 75 and 85 such as torsion springs, for elastically supporting the interlocking members 74 and 84.

The supply reel 10 and the take up reel 20 respectively include reel gears 11 and 21 that are respectively meshed with the reel driving gears 72 and 82. Central shafts 12 and 22 of the supply reel 10 and the take up reel 20 are respectively inserted into guide slots 2 and 2' ideally of arcuate form, on the main chassis 1 so that rotations of the reel brackets 73 and 83 are supported.

The moving plate 60 includes guide slots 61 and 62. The guide slots 61 and 62 are fitted with guide pins 3 and 3' fixed to the bottom surface of the main chassis 1, so that the moving plate 60 can be rectilinearly moved back and forth with guidance of the guide slots 61 and 62 and the guide pins 3 and 3'.

The reel brackets 73 and 83 respectively include through holes 73a and 83a at center portions thereof for passage of the rotation shafts 71 and 81 of the supply reel motor 70 and the take up reel motor 80. A plurality of arc slots 73b and 83b are respectively formed around circumferences of the through holes 73a and 83a. The plurality of arc slots 73b and 83b co-operate with a plurality of guide pins 4 and 4' located on the main chassis 1. Accordingly, the reel brackets 73 and 83 can be rotated through predetermined angles within the guidance of the arc slots 73b and 83b and the guide pins 4 and 4'. Combining pins 76 and 86 combined with the interlocking members 74 and 84 are fixed to the bottom surface of the reel brackets 73 and 83.

The interlocking members 74 and 84 can be rectilinearly moved back and forth by the guidance of a plurality of guide pins 74a and 84a fixed to the interlocking members 74 and 84 and a plurality of guide slots 63 and 64 formed on the moving plate 60. Elastic members 75 and 85 are respectively inserted between the interlocking members 74 and 84 and the moving plate 60.

Now, the tape cassette sensing switch moving portion of the mechanism will be described.

Referring again to Figure 3, the tape cassette sensing switch moving portion includes: a connecting unit installed on a predetermined portion of the moving plate 60; a first operating member 100 rotatably coupled to the bottom surface of the main chassis 1 adjacent to the connecting unit by a shaft pin 5; a second operating member 110 rotatably coupled to the top surface of the main chassis 1 opposed to the first operating member 100 by a shaft pin 6 and accordingly operated in association with the first operating member 100; and a slider 120 including an MIC switch 30 located thereon and rectilinearly moved back and forth along a slant slot 8 formed from a predetermined corner portion of the main chassis 1 to a center portion of the main chassis 1 by a rotational movement of the second operating member 110.

The first operating member 100 is connected with the connecting unit by a first connecting pin 101 and connected with the second operating member 110 by a second connecting pin 102.

The second operating member 110 includes a first guide slot 111 and a second guide slot 112 formed in a direction of the length thereof. The second connecting pin 102 of the first operating member 100 is inserted into the first guide slot 111 through an arc slot 7 formed on the main chassis 1. Accordingly, when the second operating member 110 is rotated by a rotational movement of the first operating member 100, the second connecting pin 102 of the first operating member 100 is guided by the arc slot 7 formed on the main chassis 1.

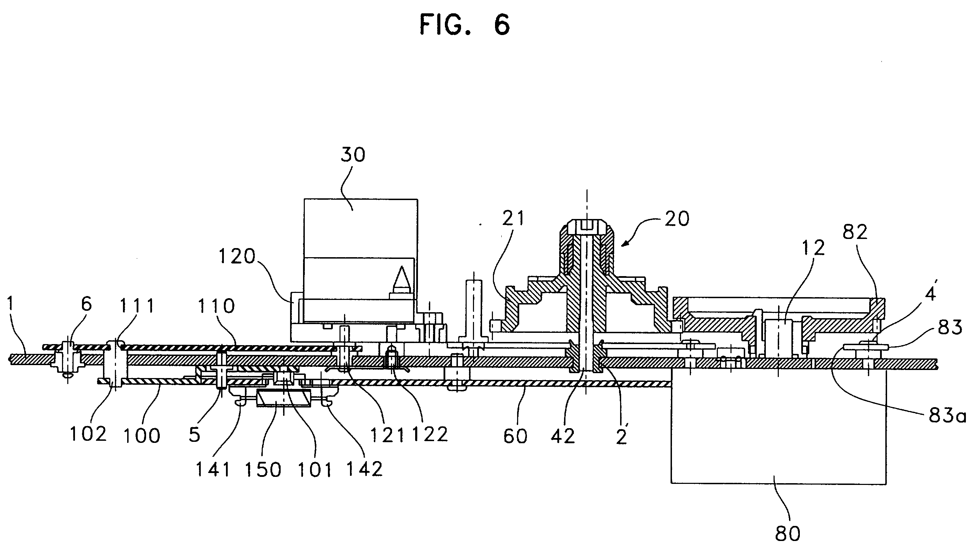

In addition, a first and a second guide pins 121 and 122 are fixed to the bottom surface of the slider 120, as shown in more detail in Figure 6. The first and the second guide pins 121 and 122 are inserted into the slant slot 8 of the main chassis 1. The first guide pin 121 is inserted into the slant slot 8 through the second guide slot 112 of the second operating member 110. Accordingly, when the second operating member 110 is rotated, the slider 120 is rectilinearly moved back and forth guided by the slant slot 8.

The MIC switch 30 functions to read data related to tape materials, recording methods, record protecting technologies and the like of the tape cassettes. As shown in Figure 1, the MIC switch includes a plurality of movable terminals 31 and each of the tape cassettes, i.e., the standard tape cassette C10 and the small tape cassette C20 includes a plurality of external terminals C11 and C21 to contact with the movable terminals 31 of the MIC switch 30.

Referring to Figure 10, the connecting unit includes a pair of connecting members, i.e., a first and a second connecting members 141 and 142, and an elastic member 150 such as a tension coil spring. The first and the second connecting members 141 and 142 are hinged with the corner portion of the moving plate 60 by respective hinging members 131 and 132 in such a manner that a space 130 for location of the first connecting pin 101 of the first operating member 100 is formed between the first and the second connecting members 141 and 142. The first connecting member 141 is connected to the second connecting member 142 by the elastic member 150.

Rotational power is influenced upon the first and the second connecting members 141 and 142 in a clockwise and a counter-clockwise directions by the elastic member 150, but stoppingportions 143 and 144 of the first and the second connecting members 141 and 142 are stopped against stopping projections 9 and 9' formed on the moving plate 60 and cannot be rotated any more.

The operation of the mechanism for moving the reels and the tape cassette sensing switch in a magnetic recorder will now be described.

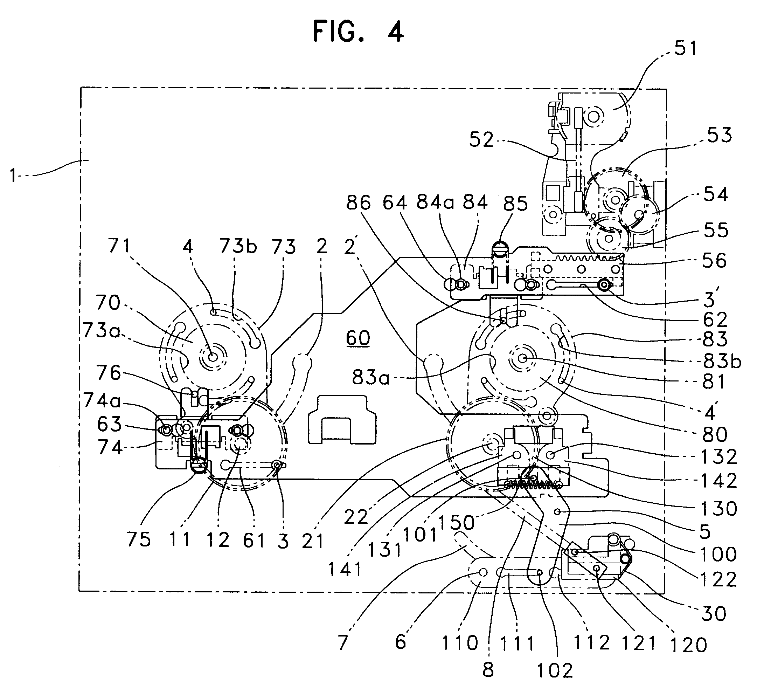

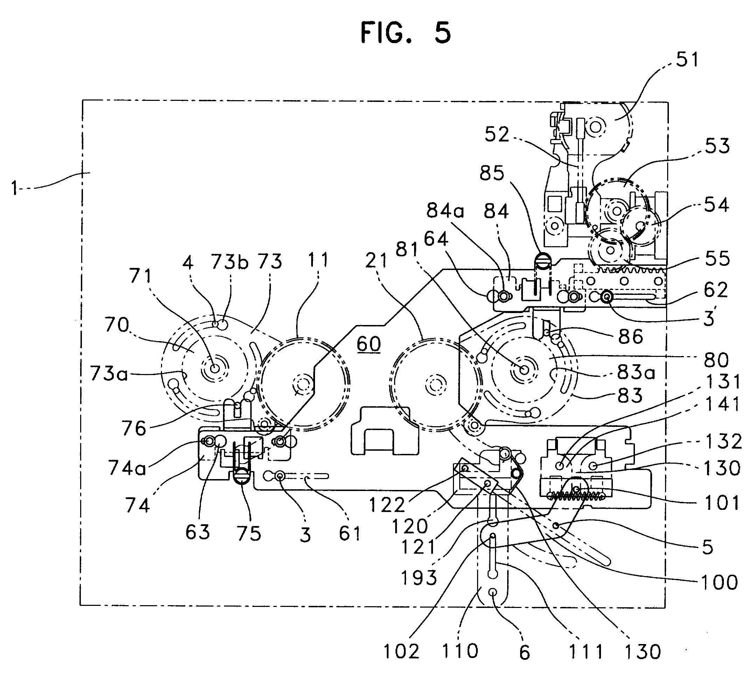

When the standard tape cassette C10 shown in Figure 1 is used, as shown in Figures 2 and 4, a distance between the supply reel 10 and the take up reel 20 is wide, and the MIC switch 30 is located near the corner of the main chassis 1. When the small tape cassette C20 shown in Figure 1 is used, as shown in Figure 5, the distance between the supply reel 10 and the take up reel 20 is narrowed, and the MIC switch 30 is located near the center of the main chassis 1. These two cases will be described in detail hereinafter.

As shown in Figure 4, when the standard tape cassette C10 is used, operational power from the driving motor 51 is transmitted through the worm gear rod 52, the first driving gear 53, the second driving gear 54, the third driving gear 55 and the rack 56, successively. As a result, the moving plate 60 is rectilinearly moved from right to left in the drawing.

At this time, since the moving plate 60 is coupled with the interlocking members 74 and 84, and the interlocking members 74 and 84 are coupled with the reel brackets 73 and 83 by the combining pins 76 and 86, a distance between the reel brackets 73 and 83 is widened.

When the distance between the reel brackets 73 and 83 is enlarged, the distance between the supply reel 10 and the take up reel 20 installed on the reel brackets 73 and 83 is accordingly enlarged and thereby adjusted to the distance between reels of the standard tape cassette C10.

By the movements of the supply reel 10 and the take up reel 20 in association with the movements of the moving plate 60, the MIC switch 30 is also adjusted to a location corresponding to the standard tape cassette C10.

In other words, since the first connecting pin 101 of the first operating member 100 is inserted into the space 130 of the first and the second connecting members 141 and 142 supported by a portion of the moving plate 60, the first operating member 100 is rotated about the shaft pin 5 in a counter-clockwise direction according to a moving direction of the moving plate 60. By the rotations of the first operating member 100, the second operating member 110 is rotated about the shaft pin 6 in a clockwise direction.

Therefore, the slider 120 of the MIC switch 30 combined with the second operating member 110 is moved along the slant slot 8 of the main chassis 1. At the corner of the main chassis 1, the movable terminals 31 of the MIC switch 30 contact the external terminals C11 of the standard tape cassette C10.

On the other hand, as shown in Figure 5, when a small tape cassette C20 is used, the operational power from the driving motor 51 is transmitted though the worm gear rod 52, the first driving gear 53, the second driving gear 54, the third driving gear 55 and the rack 56. As a result, the moving plate 60 is rectilinearly moved from left to right in the drawing.

By the movements of the moving plate 60, the distance between the reel brackets 73 and 83 is narrowed. Accordingly, the locations of the supply reel 10 and the take up reel 20 are adjusted to the location of the small tape cassette C20.

At the same time, the first operating member 100 is rotated about the shaft pin 5 in a clockwise direction. According to the rotations of the first operating member 100, the second operating member 110 is rotated about the shaft pin 6 in a counter-clockwise direction.

Therefore, the slider 120 of the MIC switch 30 combined with the second operating member 110 is moved along the slant slot 8 of the main chassis 1. The movable terminals 31 of the MIC switch 30 contact the external terminals C21 of the small tape cassette C20.

At this time, the moving plate 60 is moved little more to right in the drawing by the operational power from the driving motor 51. Accordingly, the interlocking members 74 and 84 supported by the moving plate 60 are moved in the same direction. By the movements of the interlocking members 74 and 84, the elastic members 75 and 85 supporting the interlocking members 74 and 84 are pushed. Then, the elasticity of the elastic members 75 and 85 at this time influences the reel brackets 73 and 83 respectively combined with the interlocking members 74 and 84 by the combining pins 76 and 86. As a result, the reel brackets 73 and 83 are elastically and stably supported.

In addition, the first and the second connecting members 141 and 142 are influenced by rotational power in a clockwise direction and a counter-clockwise direction by the elastic member 150 and, at the same time, the first and the second connecting members 141 and 142 are stopped by the stopping portions 9 and 9' formed in a single body with the main chassis 1 not to be rotated any more. Accordingly, when the moving plate 60 is repeatedly moved back and forth, the first operating member 100 including a first connecting pin 101 located at the space 130 between the first and the second connecting members 141 and 142 becomes rotated more stably. This results in an enhanced reliability.

Further a reduced cost, an enhanced reliability of the operation and an enhanced performance are achieved by simplifying the mechanism for moving the MIC switch. Furthermore, the whole structure is simplified by structuring the reel to be moved in association with the movements of the tape cassette sensing switch.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A mechanism for moving reels and a tape cassette sensing switch in a magnetic recorder, comprising:
power generating means (51) installed on a predetermined position of a main chassis (1);
a moving member (60) mounted on a bottom surface of said main chassis (1) in such a manner that said moving member can be rectilinearly moved back and forth;
power transmitting means (52-55) for transmitting power from said power generating means (51) to said moving member (60);
a supply reel driver (70) and a take up reel driver (80) respectively fixed to said bottom surface of said main chassis (1) in spaced apart relation from each other;
reel driving gears (72,82) respectively coupled to rotary shafts (71,81) of said supply reel driver (70) and said take up reel driver (80); and
reel supporting members (73,83) for carrying a supply reel (10) and a take up reel (20), respectively, which are concentrically combined with said reel driving gears (72,82) on said main chassis (1), said reel supporting members (73,83) each rotating by a predetermined angle associated with said rectilinear movements of said moving member to thereby alter the relative separation of said supply reel (10) and said take up reel (20) to receive at least two different sized tape cassettes.

2. The mechanism according to Claim 1, wherein said power generating means (51) comprises a driving motor (51) erect-fixed to a predetermined corner of said main chassis (1).

3. The mechanism according to Claim 2, wherein said power transmitting means (52-55) comprises:
a worm gear rod for transmitting an operational power of said driving motor (51); and
at least one driving gear (53-55) rotated by a rotational power of said worm gear rod.

4. The mechanism according to Claim 3, wherein a rack (56) is fixed to a predetermined position of said moving member (60), and a final driving gear (55) of said at least one driving gear is meshed with said rack (60).

5. The mechanism according to any of Claims 1 to 4, wherein first guide slots (61,62) are formed on said moving member (60) and first guide pins (3,3') respectively inserted into said first guide slots are located on said main chassis (1), so that when moved, said moving member (60) is guided by said first guide pins (3,3').

6. The mechanism according to any of Claims 1 to 5 wherein interlocking members (74,84) are provided in cooperation with predetermined portions of said moving member (60) in such a manner that said interlocking members (74,84) can be rectilinearly moved back and forth, and said interlocking members are elastically supported in a predetermined direction by elastic members (75,85).

7. The mechanism according to Claim 6, wherein second guide pins (74a, 84a) are provided on said interlocking members and second guide slots (63,64) for receiving said second guide pins are provided on said moving member (60), so that said interlocking members (74,84) are moved along said second guide slots.

8. The mechanism according to Claim 6 or 7, wherein each of said elastic members (75,85) includes a torsion spring one end of which is supported by said moving member (60) and an other end thereof is supported by said interlocking members (75,85).

9. The mechanism according to any of Claims 1 to 8, wherein said reel supporting members (73,83) are concentric with respect to a rotation center of said reels (10,20) and each include a plurality of arc slots (73b,83b), each said reel supporting member being rotatable through a predetermined angle with guidance of a plurality of guide pins (4,4') located on said main chassis along traces of said arc slots.

10. The mechanism according to any of Claims 6 to 9, wherein combining pins (76,86) to be connected to said interlocking members (74,84) are fixed to said reel supporting members (73,83) such that said reel supporting members are rotated in association with movements of said interlocking members (74,84).

11. The mechanism according to any preceding Claim, further comprising a tape cassette sensing switch moving portion wherein an MIC switch for sensing various data of a selected tape cassette is operated in association with movements of said moving member (60).

12. The mechanism according to Claim 11, wherein said tape cassette sensing switch moving portion comprises:
connecting means located on a position of said moving member (60);
a first operating member (100) rotatably coupled to a bottom surface of said main chassis (1) adjacent to said connecting means;
a second operating member (110) rotatably coupled to a top surface of said main chassis (1) opposed to said first operating member (100) so that said second operating member (110) can be moved in association with said first operating member (100); and
a slider (120) including said MIC switch (30) installed on a top surface thereof and rectilinearly moveable back and forth along a slant slot (8) formed on said main chassis (1) by a rotational movement of said second operating member (110).

13. The mechanism according to Claim 12, wherein said first operating member (100) includes a first connecting pin (101) connected to said connecting means, and a second connecting pin (102) connected to said second operating member (110).

14. The mechanism according to Claim 13, wherein:
said second operating member (110) includes a third guide slot (111) and a fourth guide slot (112) in a direction of a length thereof; and
said second connecting pin (102) of said first operating member (100) is inserted into said third guide slots (111) through an arc slot (7) formed on said main chassis, such that said second operating member (110) is rotated by rotational movement of said first operating member and said second connecting pin (102) of said first operating member (100) is guided by said arc slot (7).

15. The mechanism according to any of Claims 12 to 14, wherein a third and a fourth guide pins (121,122) are fixed to a bottom surface of said slider (120) and inserted into said slant slot (8), and said third guide pin (121) is inserted into said slant slot (8) through said fourth guide slot (112) such that said slider (120) is rectilinearly moved back and forth guided by said slant slot (8) by rotations of said second operating member (110).

16. The mechanism according to any of Claims 12 to 15, wherein said connecting means comprises:
first and second connecting members (141,142) respectively hinged on a corner portion of said moving member by hinging members (131,132) in such a manner that a space (130) for locating the first connecting pin (101) of said first operating member (100) is formed between said first and said second connecting members (141,142); and
an elastic member (150) for connecting said first connecting member (141) to said second connecting member (142).

17. The mechanism according to Claim 16, wherein said elastic member (150) is a tension coil spring ends of which are respectively fixed to ends of said first and said second connecting members.

18. The mechanism according to Claim 16 or 17, wherein said first and said second connecting members (141,142) cannot be rotated any more when stopping portions thereof are stopped against stopping projections (9,9') formed on said main chassis (1).

19. A mechanism for use in a magnetic recorder, comprising:
a moving member (60) arranged to be moveable in use along a linear reciprocating path;
a supply reel driver (70) and take up reel driver (80) arranged in spaced apart relation from each other, for driving a supply reel (10) and a take up reel (20), respectively; and
first and second reel support members (73,83) for supporting said supply reel (10) and said take up reel (20) respectively, said reel support members (73,83) cooperating with said moving member (60) such that said linear movement of said moving member (60) results in rotation of said support members through a predetermined angle about said supply reel driver (70) and said take up reel driver (80) respectively, thereby altering separation of said supply reel (10) and said take up reel (20) to receive different size tape cassettes.

20. A mechanism according to Claim 19, further comprising any one or more of the features disclosed in the accompanying specification, claims, abstract and/or drawings, in any combination.
